# EUROPÄISCHE PATENTANMELDUNG

(11) **EP 4 375 785 A1**
(43) Veröffentlichungstag der Anmeldung: **29.05.2024**
(21) Anmeldenummer: 22209178.7
(22) Anmeldetag: 23.11.2022
(51) Int. Cl.: G05D 1/02, G06V 10/82, G06V 10/764, G06V 20/58, G06V 40/20

(54) **FELDROBOTER UND VERFAHREN ZUR STEUERUNG DESSEN**

(71) Anmelder: Ant Robotics GmbH, 21073 Hamburg (DE)
(72) Erfinder: Rabbiosi, Sandro Costante Paolo, 21073, Hamburg (DE); Thombra, Andrew Philip, 20146 Hamburg (DE); Overath, Philipp Martin Christian, 23845 Wakendorf I (DE); Schwarz, Martin, 21073, Hamburg (DE); Giese, Ruth Renate Sabine, 21423 Winsen (DE)
(74) Vertreter: Raffay & Fleck

(57) **Zusammenfassung**

Aufgabe ist es, einen Transportroboter für eine Vielzahl an Feldarbeitern nutzbar zu machen und/oder sein Verhalten an das mindestens einer/s Feldarbeiter*in anzupassen.

Erfindungsgemäß ist die Steuerung des Feldroboters eingerichtet, mittels mindestens eines neuronalen Netzes auf Basis von Daten einen Bilderfassungsgeräts Hindernisse und Personen zu erkennen und zu klassifizieren, wobei, insbesondere für jede erkannte Person, mindestens eine erste Klassifikation, insbesondere mittels neuronalem Netz, durchgeführt wird, die Körperhaltung (Pose), Blickrichtung und/und Bewegungsrichtung und/oder -geschwindigkeit erkennt.

## Beschreibung

Die Erfindung betrifft einen Feldroboter zur Unterstützung menschlicher Arbeit auf einem Feld, beispielsweise bei der Ernte oder beim Einbringen von Jungpflanzen. Dabei liegt die Unterstützung insbesondere in der Lagerung und dem Transport von dem Feld entnommenem oder in das Feld einzubringendem Material, insbesondere pflanzliches Material, wie Erntegut oder Jungpflanzen.

Die wachsende Bevölkerung, der Klimawandel und der akute Arbeitskräftemangel setzen die Landwirtschaft enorm unter Druck. In Kombination mit steigenden Lohnkosten spüren dies besonders Betriebe im Obst- und Gemüseanbau, wie z.B. Erdbeeren und Äpfel, wo größtenteils manuell gearbeitet wird. Bis zu 25% der gesamten Arbeit während der Erntetätigkeit entfällt auf den manuellen Transport der vollen Erntekisten.

Aus dem Stand der Technik ist es aus der WO 2020 132 233 A1 und US 10,459,443 B2 bekannt, einen Transportroboter so auszugestalten, dass er genau einer Person folgt oder vorauseilt und dabei in der Lage ist Pflanzreihen und Hindernisse zu erkennen. Um dies zu erreichen, ist der Transportroboter eingerichtet, genau eine Person auszuwählen, der er folgt oder vorauseilt. Die WO 2020 132 233 A1 nutzt zur Personenerkennung auch neuronales Netz.

Aufgabe ist es, einen Transportroboter für eine Vielzahl an Feldarbeitern nutzbar zu machen und/oder sein Verhalten an das mindestens einer/s Feldarbeiter^{∗}in anzupassen.

Die Erfinder haben erkannt, dass es wünschenswert ist, nicht einer Person zu folgen, sondern sich an einer Gruppe von Arbeitern zu orientieren und auf das Verhalten der Personen zu reagieren und dabei nicht nur deren Bewegung zu berücksichtigen.

Gelöst wird die Aufgabe durch einen Feldroboter sowie ein Verfahren zur Steuerung eines solchen und ein Verfahren zur Entnahme und/oder Einbringung von Material aus/in ein Feld.

Der Feldroboter kann beispielsweise volle Kisten autonom von den Feldarbeitern zu zentralen Sammelstellen transportiert. Dies steigert die Produktivität um 30-40% und verringert gleichzeitig die körperliche Belastung der Arbeiter^{∗}innen. Damit Roboter zusammen mit Menschen existieren können, muss die Sicherheit für die Menschen unbedingt gewährleistet sein. Andererseits kann die Sicherheit die Arbeitseffizienz von Robotern verringern. Es handelt sich also um ein Abwägungsproblem zwischen menschlicher Sicherheit und Roboter-Effizienz im Bereich der Mensch-Roboter-Interaktion. Die Erfindung trägt zur Lösung dieses Problems bei.

Ein erfindungsgemäßer Feldroboter, weist mindestens ein Fahrwerk und insbesondere mindestens eine drauf angeordnete Plattform zur Lagerung auf. Zusätzlich oder alternativ zur Plattform kann auch mindestens eine Vorrichtung zum Jäten, Sprühen, Pflücken, UV-Bestrahen, Pflügen, zur Ertragsmessung, zum Wiegen, zur Reifeprüfungsgeräte und zur Barcodelesung und/oder zur optischen Pflanzenerkennung und/oder mindestens eine Aufnahme für solche Vorrichtungen vorgesehen sein. Zudem weist der Feldroboter mindestens einen Energiespeicher sowie mindestens eine Steuerung zur Steuerung des mindestens einen Fahrwerks und mindestens ein, insbesondere optisches, Bilderfassungsgerät, insbesondere eine Kamera, auf.

Die Steuerung beinhaltet dabei insbesondere mindestens eine CPU, Arbeitsspeicher und einen Programmspeicher. Im Programmspeicher ist insbesondere ein Programm vorgehalten, dass von der CPU ausgeführt werden kann und eingerichtet ist, bei Ausführung durch die CPU die Steuerung und/oder das Verfahren auszuführen, insbesondere wie nachfolgend beschrieben. Der Energiespeicher ist insbesondere eingerichtet, die Steuerung und/oder das Fahrwerk mit Energie zu versorgen. Insbesondere weist der Feldroboter mindestens eine Solarzelle zur Speisung des Energiespeichers und/oder zur direkten Energieversorgung der Steuerung und/oder des Fahrwerks auf.

Erfindungsgemäß ist die Steuerung eingerichtet, mittels mindestens eines neuronalen Netzes auf Basis von Daten mindestens des mindestens einen Bilderfassungsgeräts Hindernisse und Personen zu erkennen und zu klassifizieren, wobei, insbesondere für jede erkannte Person, mindestens eine erste Klassifikation, insbesondere mittels neuronalem Netz, durchgeführt wird, die Körperhaltung (Pose), Blickrichtung und/und Bewegungsrichtung und/oder -geschwindigkeit erkennt.

Vorteilhafterweise weist der Feldroboter zudem mindestens ein Entfernungsmessgerät auf.

Mit Vorteil ist die Steuerung, wenn der Feldroboter mindestens ein Entfernungsmessgerät aufweist, eingerichtet, mindestens eine zweite Klassifikationen für jedes in einem vordefinierten Sicherheitsabstand des Feldroboters insbesondere mittels des mindestens einen Entfernungsmessgerät erkannte Objekt durchzuführen, um, insbesondere mittels neuronalem Netzwerk, festzustellen, ob es sich dabei um eine auf Grundlage der Daten des mindestens einen Bilderfassungsgeräts klassifizierte Person handelt und wobei insbesondere auf Basis durchgeführter zweiter Klassifikationen das Fahrwerk angesteuert wird.

Gelöst wird die Aufgabe auch durch ein Verfahren zur Ansteuerung eines Feldroboters wobei mittels mindestens eines neuronalen Netzes auf Basis von Daten mindestens mindestens eines Bilderfassungsgeräts Objekte, insbesondere Hindernisse und Personen, erkannt und klassifiziert werden, wobei, insbesondere für jede erkannte Person, mindestens eine erste Klassifikation, insbesondere mittels neuronalem Netz, durchgeführt wird, die Körperhaltung, Blickrichtung und/und Bewegungsrichtung und/oder -geschwindigkeit erkennt. Vorteilhafterweise wird mindestens eine zweite Klassifikationen für jedes in einem vordefinierten Sicherheitsabstand des Feldroboters, insbesondere mittels mindestens eines Entfernungsmessgeräts, erkannte Objekt durchgeführt wird, zur Feststellung, insbesondere mittels neuronalem Netzwerk, ob es sich dabei um eine auf Grundlage der Daten des mindestens einen Bilderfassungsgeräts klassifizierte Person handelt und wobei insbesondere auf Basis durchgeführter Klassifikationen ein Fahrwerk angesteuert wird.

Insbesondere ist das Verfahren so ausgebildet, dass es die Schritte ausführt zu deren Durchführung die Steuerung wie nachfolgend beschrieben zwingend und/oder vorteilhaft eingerichtet ist.

Gelöst wird die Aufgabe auch durch ein Verfahren zum Entnehmen und/oder Einbringen von Gegenständen, insbesondere pflanzlichem Material aus/in ein Feld unter Nutzung eines erfindungsgemäßen Feldroboters und/oder Verfahrens, wobei eine Mehrzahl von Arbeitern in der Umgebung, insbesondere in einem Umkreis von bis zu 20m, insbesondere bis zu 10 m, Radius um den Feldroboter oder den Mittelpunkt, des Feldroboters Feldarbeiten verrichtet und wiederholt pflanzliches Material auf dem Feldroboter abstellt und/oder von ihm entnimmt, wobei sich die Mehrzahl zumindest gemittelt in mindestens eine Richtung, insbesondere entlang von Pflanzreihen, fortbewegt und der Feldroboter so gesteuert wird, dass er der Mehrzahl folgt, insbesondere mittels eines erfindungsgemäßen Verfahrens und/oder wie für die Steuerung beschrieben.

Der Sicherheitsabstand erstreckt sich insbesondere vor dem und/oder um den Feldroboter herum, insbesondere vom Feldroboter aus über eine Länge im Bereich von 0,5 bis 2m, insbesondere bis 1,5m und/oder ist der Sicherheitsabstand gegeben durch einen Umkreis in der Waagerechten um den Feldroboter, insbesondere seines geometrischen Mittelpunktes mit einem Radius im Bereich von 0,5 bis 2m, insbesondere bis 1,5m, ggf. zuzüglich des Radius des Umkreises um den Feldroboter. Der Sicherheitsabstand kann auch asymmetrisch ausgestaltet sein. Er definiert einen Sicherheitsbereich.

Vorteilhafterweise ist die Steuerung so ausgebildet und/oder wird das Verfahren so geführt, dass wenn das im vordefinierten Sicherheitsabstand des Feldroboters erkannte Objekt als eine auf Grundlage der Daten des mindestens einen Bilderfassungsgeräts klassifizierte Person klassifiziert wird der Feldroboter gestoppt wird und ansonsten die Fahrt, gegebenenfalls mit insbesondere reduzierte Fahrtgeschwindigkeit, insbesondere Schleichgeschwindigkeitsstufe, fortgesetzt wird, insbesondere zumindest bis die Fahrt auf Grund anderer Vorkehrungen, wie dem Stopp durch Anschlagen von Näherungssensoren unterbrochen wird.

Vorteilhafterweise ist oder umfasst die mindestens eine erste Klassifikation ein regionbasiertes neuronales Netzwerk, insbesondere R-CNN, Fast R-CNN, Faster R-CNN, Maks R-CNN und/oder Mesh R-CNN und/oder Objekterkennungsnetzwerk, insbesondere You Only Look Once (YOLO). Dadurch lassen sich schnell und Zuverlässige ein- oder mehrstufig Personen und Hindernisse, sowie Boundingboxen erkennen und klassifizieren, und dies sogar in Bezug auf Körperhaltung, Blickrichtung und/und Bewegungsrichtung und/oder -geschwindigkeit. Daraus lassen sich dann Vorhersagen oder Wahrscheinlichkeiten für das zukünftige Verhalten ableiten.

Zudem oder alternativ kann OpenFace 2.0 verwendet werden, um die Gesichtsaktionseinheiten (action units / AUs) zu erkennen, beispielsweise um die Blickrichtung oder sogar Gemütszustände zu ermitteln.

Mit Vorteil kann auch eine plötzliche Änderung der menschlichen Kopfhaltung dadurch erkannt werden. Dies ist typisch für das Ende einer Arbeit am Feld und für die folgende Bewegung in Richtung des Roboters und somit für eine Vorhersage von großem Vorteil. Aber auch die Historie des Verhaltens kann berücksichtigt werden, beispielsweise wie lange eine Person schon in einer Tätigkeit, beispielsweise als pflückend erkannt wurde und/oder wie lange sie diese Tätigkeit in der Vergangenheit am Stück ausgeführt hat und/oder wie sie sich in der Vergangenheit im Anschluss daran verhalten hat. So kann beispielsweise abgeschätzt werden, wie lange noch gepflückt wird, bis die Person sich wieder zum Feldroboter begibt, beispielsweise um etwas auf- und/oder abzuladen.

Beispielsweise weist ein Mensch der gerade in der Hocke sitzt und nicht zum Feldroboter blickt alle Merkmale dafür aus, dass gerade gepflückt wird und eine Positionsänderung eher langsam erfolgt bzw. unwahrscheinlich ist und somit die Fahrgeschwindigkeit in seiner Richtung im Eillauf stattfinden kann. Ein Mensch der gerade seine Blickrichtung schnell zum Feldroboter wendet und/oder aufgestanden ist und/oder sich zügig in Richtung des Roboters dreht weist alle Merkmale dafür aus, dass er sich zum Feldroboter bewegen wird, um beispielsweise etwas ab- und/oder aufzuladen und somit die Fahrgeschwindigkeit etwas gedrosselt werden sollte, in Erwartung, dass dieser Mensch bald in den Anhaltebereich hineingeraten wird.

Mit Vorteil ist/wird das neuronale Netz für die erste Klassifikation, insbesondere das Objekterkennungsnetzwerk You Only Look Once (YOLO), mit einem maßgeschneiderten Datensatz für die Erkennung von Arbeitern auf dem Feld mit Körperhaltungen wie Hocken und Knien trainiert, da diese Bilder des Menschen kaum üblichen Bildern von Menschen ähneln.

Vorteilhafterweise werden die erkannten Bounding Boxen, insbesondere ihre Mittelpunktskoordinaten, mit einem dem Tiefenbild auf Basis von Daten des mindestens einen Entfernungsmessgeräts abgeglichen, um den Abstand zwischen den Personen und der Bilderfassungsvorrichtung zu ermitteln oder genauer zu bestimmen. Mit Vorteil ist die Steuerung entsprechend eingerichtet.

Mit Vorteil ist der Feldroboter, insbesondere die Steuerung, eingerichtet ist und/oder wird für mindestens eine, insbesondere jede erkannte Person, insbesondere basierend zumindest auf Körperhaltung, Blickrichtung und/und Bewegungsrichtung und/oder -geschwindigkeit eine Wahrscheinlichkeitsverteilung für den zukünftigen Aufenthalt der Person zu bestimmen/bestimmt. Mit weiterem Vorteil wird zumindest basierend auf dieser mindestens einen Wahrscheinlichkeitsverteilung eine optimale Position des Feldroboters bestimmt und/oder das Fahrwerk angesteuert, insbesondere unter Verwendung einer Dichteverteilung bestimmter Wahrscheinlichkeitsverteilungen. Vorteilhafterweise ist die Steuerung dazu eingerichtet.

So kann beispielsweise in einer einfachen Ausgestaltung eine von-Mises-Verteilung als Wahrscheinlichkeitsverteilung für die zukünftige Aufenthaltswahrscheinlichkeit verwendet werden, in deren Schärfe beispielsweise die Körperhaltung, Blickrichtung und/und Bewegungsrichtung und/oder -geschwindigkeit und/oder vorausgehendes Verhalten einfließt. So kann beispielsweise einer gerade in die Hocke gegangene Person eine größere Schärfe zugeordnet werden als einer gerade aufgestandenen Person. Es kann aber auch eine nicht symmetrische, gerichtete Verteilung verwendet werden.

Als Dichteverteilung kann beispielsweise eine Kernel-Dichte-Schätzung verwendet werden, die auch mittels eines Gewichtungsfaktors optimiert werden kann, der beispielsweise aus der Wahrscheinlichkeit der, insbesondere aktiven, Annäherung an den und/oder Nutzung des Feldroboters und/oder des Eintreten in den Anhalteberich in der Zukunft und/oder einem oder mehreren vorbestimmten zukünftigen Zeitintervallen abgeleitet sein kann. Auch kann der Gewichtungsfaktor eine erkannte oder auf Grund des vergangenen Verhalten erwarteten Traglast der Person berücksichtigen. So können Wege mit schwerer Traglast, beispielsweise mit Erntegut nach einem Pflücken zu Lasten von Längeren Wegen mit geringeren oder ohne Traglasten im Mittel verkürzt werden.

So können die notwendigen Wege der die Feldarbeit verrichtenden Personen, insbesondere im Mittel, reduziert werden.

Mit Vorteil kann ein lokal begrenzter Abstoßungswert oder -verteilung für jede Person bestimmt werden, der/die nach seiner Bestimmung über einen vordefinierten Zeitraum insbesondere ansteigt, entweder beispielsweise um einen vorbestimmten Faktor oder auf seinen bestimmten Wert. Dieser Wert kann bestimmt werden auf Basis zumindest der Körperhaltung, Blickrichtung und/und Bewegungsrichtung und/oder -geschwindigkeit der Person, beispielsweise wie die Schärfe der Verteilung oder mit ihr identisch sein. Der Abstoßungswert kann auch durch die Verteilung, beispielsweise von-Mises-Verteilung, gegeben sein. Diese Abstoßungswerte können in die Steuerung des Fahrwerks mit einfließen, insbesondere so, dass die Abstoßungen auf dem Fahrtweg minimiert werden. Das Anwachsen des Abstoßungswerts über einen bestimmten Zeitraum ermöglicht es, insbesondere beim nicht-Vorhandensein von Personen auf der gegenüberliegenden Seite, bezogen auf die Seite des Feldroboters, auf der eine Person einen Abstoßungswert erhält, dieser Person, noch an den Feldroboter heranzutreten, bevor sich dieser von der Person entfernt. Dies ist insbesondere bei einer Mehrzahl um den Roboter herum und nicht nur vor und/oder neben ihm arbeitenden Menschen von Vorteil.

In die Steuerung des Fahrwerks einfließen oder dabei berücksichtig können Werte beispielswiese durch Berücksichtigung bei einer Fahrtplanung, die dann zur Ansteuerung des Fahrwerks verwendet wird.

So ist der Feldroboter, insbesondere die Steuerung, so eingerichtet und/oder das Verfahren so ausgebildet, dass zumindest basierend auf Entfernung, Körperhaltung, Blickrichtung und/und Bewegungsrichtung und/oder -geschwindigkeit und/oder Wahrscheinlichkeitsverteilung für den zukünftigen Aufenthalt und insbesondere einer Gewichtung basierend auf dem vorhergesagten Verhalten der Person eine optimale Position, insbesondere unter Verwendung einer, insbesondere gewichteten, Dichteverteilung zu bestimmen und insbesondere mittels Ansteuerung des Fahrwerks anzusteuern. Dabei können weitere Vorgaben und/oder Rahmenbedingungen berücksichtigt werden. Die optimale Position wird insbesondere so bestimmt, dass die Laufwege der arbeitenden Personen reduziert und/oder minimiert werden. Dies basiert verständlicherweise allein auf Wahrscheinlichkeiten und/oder Vorhersagen und kann nicht die tatsächlichen zukünftigen Laufwege berücksichtigen. Auch kann das ansteuern der optimalen Position durch andere Beschränkungen verhindert werden, beispielsweise durch Hindernisse oder andere Beschränkungen, wie Reduktion des Energieverbrauchs oder Reduktion der Beschleunigungen. So kann beispielsweise ein Ansteuern der optimalen Position nur vorgenommen werden, wenn ein Mindestabstand überschritten ist oder für eine vorbestimmte Zeit voraussichtlich überschritten wird. Es können auch unterschiedliche Mindestabstände für unterschiedliche Richtungen, beispielsweise Vorwärts- und Rückwärtsfahrt, bestimmt werden. In der Regel werden auch die vorhandenen Pflanzreihen eine Beschränkung darstellen, da in der Regel nach dem Einfahren in eine Reihe ein Wechsel der Reiche bis zum Erreichen des Endes vermieden werden soll.

Mit Vorteil ist der Feldroboter, insbesondere die Steuerung, so eingerichtet und/oder wird das Verfahren so geführt, dass bei Erkennung mindestens einer auf den Roboter zugehender Person, ein Entfernen des Feldroboter von dieser Person durch Stoppen des Fahrwerks gestoppt wird, insbesondere nur dann, wenn die Wahrscheinlichkeit groß ist, dass die Person an den Feldroboter herantreten möchte. Dadurch wird die Zufriedenheit und die Effizienz der Person gesteigert.

Bevorzugt ist der Feldroboter, insbesondere die Steuerung, so eingerichtet und/oder wird das Verfahren so geführt, dass eine Bahnplanung, insbesondere mittels einer Kostenkarte der Befahrbarkeit und/oder Traversabilitätskarte, insbesondere basierend auf Neigung, Rauheit und/oder Stufenhöhe, durchgeführt wird und für die Ansteuerung des Fahrwerks genutzt wird. Dadurch lassen sich auf einfache Weise insbesondere auch kleinere Hindernisse vermeiden, ohne große Nachteile in Kauf zu nehmen. Auch kann dadurch die Sicherheit weiter erhöht werden und eine Beschädigung von pflanzlichem Material, das im oder auf dem Feld wächst, weitgehend vermieden werden.

Vorteilhafterweise ist der Feldroboter, insbesondere die Steuerung, so eingerichtet und/oder wird das Verfahren so geführt, dass bei Annäherung einer Person unter einen vordefinierten Anhalteabstand, der insbesondere durch den Anhaltbereich gegeben ist, der Feldroboter angehalten wird, insbesondere mit einer Verzögerung mit einem Betrag von weniger als 3 m/s², insbesondere weniger als 1,5 m/s², und zudem eingerichtet ist, bei Annäherung einer Person in einen vordefinierten kleineren Sicherheitsabstand unmittelbar zu stoppen, insbesondere mit einer Verzögerung mit einem Betrag von größer als 3m/s². Dadurch lässt sich die Sicherheit erhöhen und durch eine Erhähung des Vertrauens dem Roboters gegenüber die Arbeitsgeschwindigkeit der Personen steigern und zudem eine Gefährdung der Ladung vermeiden.

Der Anhaltebereich erstreckt sich insbesondere vor dem und/oder um den Feldroboter herum, insbesondere vom Feldroboter aus über eine Länge im Bereich von 1 bis 10m, insbesondere von 1,5 und/oder bis 5 m und/oder ist der Anhaltebereich gegeben durch einen Umkreis in der Waagerechten um den Feldroboter, insbesondere seinen geometrischen Mittelpunkt mit einem Radius im Bereich von 1 bis 10m, insbesondere von 1,5 m und/oder bis 5m, ggf. zuzüglich des Radius des Umkreises um den Feldroboter. Der Anhalteabstand, der richtungsabhängig sein kann, ist insbesondere durch den Anhaltebereich definiert.

Der Anhaltebereich ist insbesondere nicht ein solcher, der dazu genutzt wird, den Feldroboter zu stoppen, wenn sich eine Person in ihm aufhält, sondern insbesondere ein solcher, der genutzt wird, die Geschwindigkeit zu reduzieren, wenn sich eine Person darin aufhält. Dies erhöht die Sicherheit und Akzeptanz und kann auch die Effizienz erhöhen, da die Menschen mit mehr Vertrauen und zügiger an den Feldroboter herantreten, wenn dieser ein abbremsen bei Eintritt in den Anhaltebereich zeigt.

Mit Vorteil ist der Feldroboter, insbesondere die Steuerung, so eingerichtet und/oder wird das Verfahren so geführt, dass, bei Erkennung mindestens einer auf den Roboter zugehender Person, ein Entfernen des Feldroboter durch Anhalten des Fahrwerks gestoppt wird, auch wenn die Person eine Entfernung größer als eine vordefinierte Sicherheitsentfernung und/oder ein vordefinierter Anhalteabstand aufweist, insbesondere nur dann wenn eine große Wahrscheinlichkeit besteht, dass die Person an den Feldroboter herantreten möchte und/oder wird. Dies kann die durch die Personen zurückzulegenden Wege reduzieren.

Vorteilhafterweise ist der Feldroboter, insbesondere die Steuerung, so eingerichtet und/oder wird das Verfahren so geführt, dass bei Erkennung mindestens einer auf den Roboter zugehender Person, der Feldroboter angehalten wird, auch wenn die Person eine Entfernung größer als eine vordefinierte Sicherheitsentfernung und/oder sich außerhalb eines vordefinierten Anhalteabstandes aufweist. Dies kann die Sicherheit erhöhen und auch die Effizienz der arbeitenden Personen auf Grund größerem Vertrauen in die Sicherheit erhöhen.

Mit Vorteil ist der Feldroboter, insbesondere die Steuerung, so eingerichtet und/oder wird das Verfahren so geführt, dass das Fahrwerk bei Unterschreiten eines vordefinierten Anhalteabstandes durch mindestens eine erkannte Person angehalten wird. Dies kann die Sicherheit erhöhen und auch die Effizienz der arbeitenden Personen auf Grund größerem Vertrauen in die Sicherheit erhöhen.

Vorteilhafterweise ist der Feldroboter, insbesondere die Steuerung, so eingerichtet und/oder wird das Verfahren so geführt, dass bei Erkennen mindestens einer Person ein optimaler Abstand unter Berücksichtigung von Abstand, Körperhaltung, Blickrichtung und/und Bewegungsrichtung und/oder -geschwindigkeit und/oder Gewichtung bestimmt und/oder angefahren wird.

Mit weiterem Vorteil ist der Feldroboter, insbesondere die Steuerung, so eingerichtet und/oder wird das Verfahren so geführt, dass bei Erkennen mehr als einer Person eine optimale Position zu der erkannten Mehrzahl von Personen bestimmt und die Vorausfahrt so gesteuert wird, dass dieser möglichst und/oder runter Beachtung weiterer Randbedingung erreicht wird und/oder das Fahrwerk so angesteuert wird, dass diese Position zumindest näherungsweise und/oder runter Beachtung weiterer Randbedingung eingenommen wird. Dadurch lassen sich Laufwege reduzieren.

Mit Vorteil ist der Feldroboter, insbesondere die Steuerung, so eingerichtet und/oder wird das Verfahren so geführt, dass kontinuierlich, insbesondere mindestens ein Mal pro Sekunde, insbesondere mindestens drei Mal pro Sekunde, eine optimale Position bestimmt wird. Dadurch lässt sich die Effizienz weiter verbessern.

Mit Vorteil ist der Feldroboter, insbesondere die Steuerung, so eingerichtet und/oder wird das Verfahren so geführt, dass kontinuierlich, insbesondere mindestens ein Mal pro Sekunde, insbesondere mindestens drei Mal pro Sekunde, eine erste und/oder zweite Klassifikation für jedes Objekt, Hindernis und/oder Person durchgeführt. Dadurch lässt sich die Effizienz, aber auch die Sicherheit weiter verbessern. Insbesondere lässt sich dadurch der Verlauf des Verhaltens der Personen besonders gut erkennen und somit lassen sich besonders gute Vorhersagen treffen.

Mit Vorteil ist der Feldroboter, insbesondere die Steuerung, so eingerichtet und/oder wird das Verfahren so geführt, dass alle Geschwindigkeitsänderungen abgesehen vom Stoppen bei Unterschreiten eines Sicherheitsabstandes mit einer Beschleunigung mit einem Betrag von kleiner 3 m/s², insbesondere weniger als 1,5m/s², durchgeführt werden. Dadurch lässt sich die Sicherheit erhöhen, auch die der Ladung.

Bevorzugt ist der Feldroboter, insbesondere die Steuerung, so eingerichtet und/oder wird das Verfahren so geführt, dass, der Feldroboter in mindestens zwei Geschwindigkeitsstufen, und zwar einer schnelleren Eilgeschwindigkeitsstufe, insbesondere mit einer Geschwindigkeit im Bereich von oder mehr als 0,5 m/s, insbesondere bis 1,5 m/s, insbesondere bis 3m/s, und einer langsameren Schleichgeschwindigkeitsstufe bis maximal 0,5 m/s, insbesondere mehr als 0,1m/s, fortzubewegen, wobei die Steuerung so eingerichtet und/oder wird das Verfahren so geführt, dass die Fahrt und/oder das Zurücklegen der Entfernung zu einer auf Basis der Klassifikationen bestimmten optimalen Position oder Sollposition in Eilgeschwindigkeitsstufe erfolgt, wenn keine sich dem Feldroboter nähernde und/oder zuwendende oder zugewandte Person, insbesondere in einem Umkreis von bis zu 10 m Radius um den Mittelpunkt des Roboters, erkannt wird und die Fahrt und/oder das Zurücklegen anderenfalls nur in Schleichgeschwindigkeit erfolgt. Dies erhöht die Effizienz und Sicherheit.

Mit besonderem Vorteil ist der Feldroboter so ausgebildet, dass die Plattform von mindestens vier Seiten des Feldroboters zur Entnahme und/oder Ablage zugänglich ist und/oder der Feldroboter an mindestens zwei Seiten angeordnete ein/ausklappbare Transportmittel, insbesondere Ablageflächen, aufweist. Dadurch wird insbesondere bei der Optimierung der Fahrt und/oder des Position des Feldroboters unter Beachtung mehrerer, unter Umständen um den Feldroboter herum, arbeitenden Personen ein besonderer Vorteil realisiert, da dadurch Laufwege besonders kurz gehalten werden können und der Feldroboter auf Felden mir Reihen Arbeitern in besonders vielen Reihen unterstützen kann und dabei die Notwendigkeit der Überquerung von Reihen durch die Arbeiter vermieden oder zumindest deutlich reduziert wird. Was die Kraftanstrengung der Arbeiter reduziert, deren Verletzungsrisiko reduziert und die Wahrscheinlichkeit von herunterfallendem pflanzlichem Material, beispielsweise durch Stolpern der solches tragenden Arbeiter, reduziert wird.

Insbesondere weist der Feldroboter ausreichend Bilderfassungsgeräte auf, um auf zwei, insbesondere auf vier Seiten, insbesondere rundum Bilddaten erfassen zu können. Dadurch wird nicht nur die Sicherheit erhöht, sondern können Personen an unterschiedlichen Seiten bei Fahrt berücksichtigt werden.

Insbesondere weist der Feldroboter mindestens an zwei in der waagerechten Ebene diametral gegenüberliegenden Ecken Entfernungsmessvorrichtungen, insbesondere Scanner, insbesondere 2D-LiDAR-Scanner, Laserscanner und/oder Ultraschallentfernungsmesser, auf, die insbesondere so angeordnet und eingerichtet sind, rund um den Feldroboter Entfernungen bestimmen zu können.

Mit Vorteil für die Sicherheit weist der Feldroboter Nahfeldsensoren auf, die einen Sicherheitsstopp bewirken, wenn Personen und/oder Hindernisse im Nahfeld erkannt werden.

Weitere Vorteile und mögliche Ausgestaltungen sollen im Folgenden rein exemplarisch und nicht beschränkend anhand der rein schematischen Figuren erläutert werden. Dabei zeigen:
- Fig. 1: ein Ablaufdiagramm,
- Fig. 2: eine Veranschaulichung des Einflusses der Körperhaltung und
- Fig. 3: eine Veranschaulichung der Berücksichtigung einer Vielzahl von Menschen.

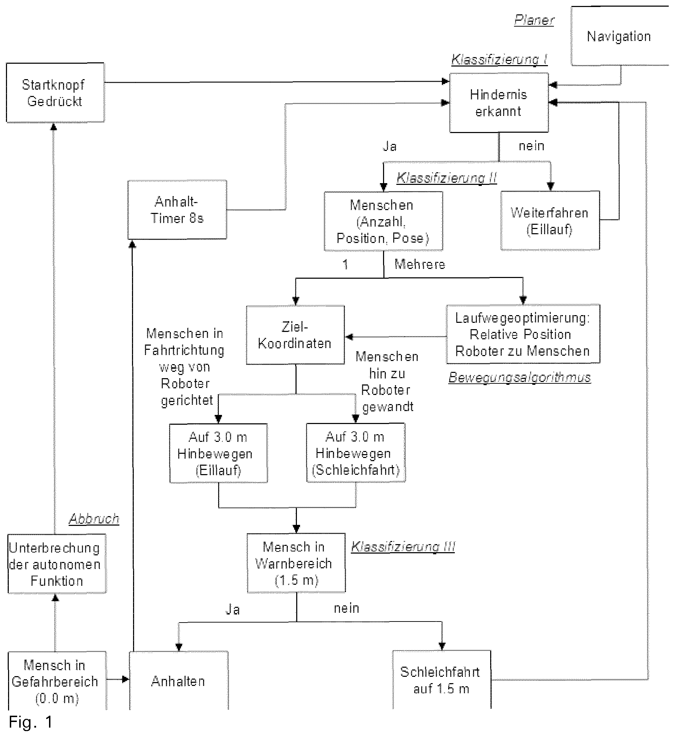

Fig. 1 zeigt ein exemplarisches und vereinfachtes Ablaufdiagramm. Der Planer (oben rechts) erstellt auf Basis der erfassten Daten der Bodenfläche in Fahrtrichtung eine Cost Map und berechnet die optimale Position. Auf dieser Grundlage wird, sobald der Startknopf gedrückt wurde (oben links) das Fahrwerk gesteuert, sofern nicht andere Ereignisse darauf einwirken. Es findet in der Regel eine Eilfahrt, zum Beispiel mit 1,5 m/s, statt.

Wird ein Hindernis, hier mittels Klassifikation I, erkannt erfolgt eine Klassifizierung des Hindernisses (Klassifizierung II). Klassifizierung I und II sind Teil der ersten Klassifizierung. Handelt es sich um mindestens einen Menschen, werden Anzahl, Position, Körperhaltung und Blickrichtung sowie Geschwindigkeit bestimmt.

Handelt es sich um mehrere Menschen, werden diese dem Planer übergeben, der mit einem Bewegungsalgorithmus die optimale Position neu bestimmt. Handelt es sich um nur eine Position, die insgesamt erkannt ist, wird diese vom Planer als neues Ziel angenommen.

Zudem wird bestimmt, ob Menschen zum Roboter gewandt sind, also zum Beispiel nicht hockend aber zum Roboter hinblickend. Unter diesen wird bestimmt, ob einer dieser näher als 3 m am Roboter positioniert ist. Ist dies der Fall wird die Fahrt auf Schleichfahrt mit 0,1 m/s reduziert.

Des Weiteren wird ermittelt, ob irgendein Mensch im Warnbereich lokalisiert ist. Dann wird die Fahrt unmittelbar gestoppt. Im Fall eines Stopps wird dieser für 8s beibehalten und dann erneut geprüft, ob die Fahrt in Eil- oder Schleichtempo oder gar nicht fortgesetzt werden kann.

Zudem wird mittels Nahfeldsensoren geprüft, ob Menschen oder ähnliche Hindernisse im Nahfeld vorhanden sind und bei auffinden die Fahrt ebenfalls sofort gestoppt.

Durch einen Abbruch wird das Vorgehen gestippt, bis es wieder gestartet wird.

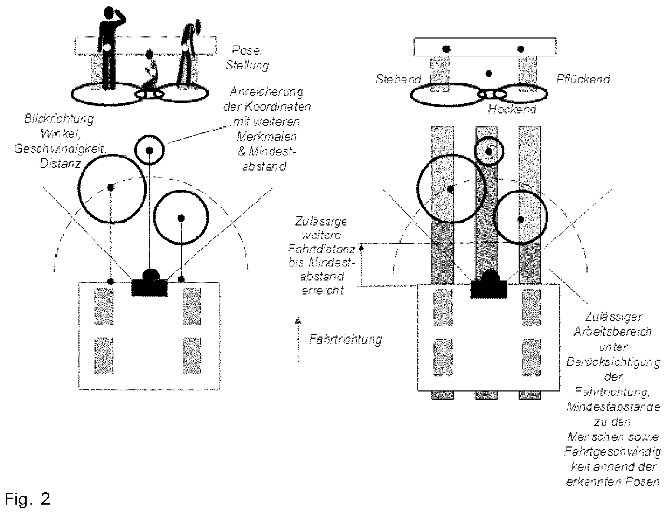

Fig. 2 zeigt im linken oberen Bereich drei Personen in unterschiedlicher Pose bzw. bei unterschiedlicher Tätigkeit vor dem Feldroboter gezeigt: (von Links nach rechts) den Feldroboter stehend ansehend, abgewandt hockend/pflückend, abgewandt gebückt/pflückend. Ihnen sind jeweils van-Mises-Verteilungen mit unterschiedlicher Schärfe zugeordnet worden, die durch Kreise mit unterschiedlichem Durchmesser veranschaulicht sind. Dem Roboter ist dabei das Einfahren in eine vorgegebene Aufenthaltswahrscheinlichkeit (hier durch die Kreise dargestellt) nicht gestattet, von ihnen hat er einen Mindestabstand, auch Sicherheitsabstand, gegeben durch den Sicherheitsbereich, in Fig. 1 Warnbereicht, zu waren. In der Darstellung oben schaut man auf die Personen und den dahinter angeordneten Feldroboter.

In der Darstellung darunter schaut man von oben auf den Feldroboter (Viereck) und davor angeordnet gezeigt sind die Kreise, die die van-Mises-Verteilung veranschaulichen. Dargestellt ist an der Front des Feldroboters auch eine Kamera. Die Fahrtrichtung des Roboters ist durch einen Pfeil nach oben dargestellt.

Im rechten Teil der Abbildung ist im oberen Bereich noch einmal die Kreise mit Schwerpunkten der Personen als kleine schwarze gefüllte Kreise vor dem Feldroboter.

Darunter dargestellt ist wie im linken Teile eine Aufsicht, jedoch mit Hervorhebung der befahrbaren Spuren (hell/dunkel graue Steifen) zwischen den Pflanzreichen und der Kenntlichmachung der maximalen Fahrweite (dunkel grau) in Bezug auf jede der drei Personen. In diesem Beispiel ist der Feldroboter so eingerichtet, dass er den Menschen vor seiner Front maximal hinterherfährt. Dabei wird der Feldroboter in dieser Situation nur die kürzeste maximale Fahrweite ausnutzen, da er auf Grund der Pflanzreichen nicht ausweichen kann.

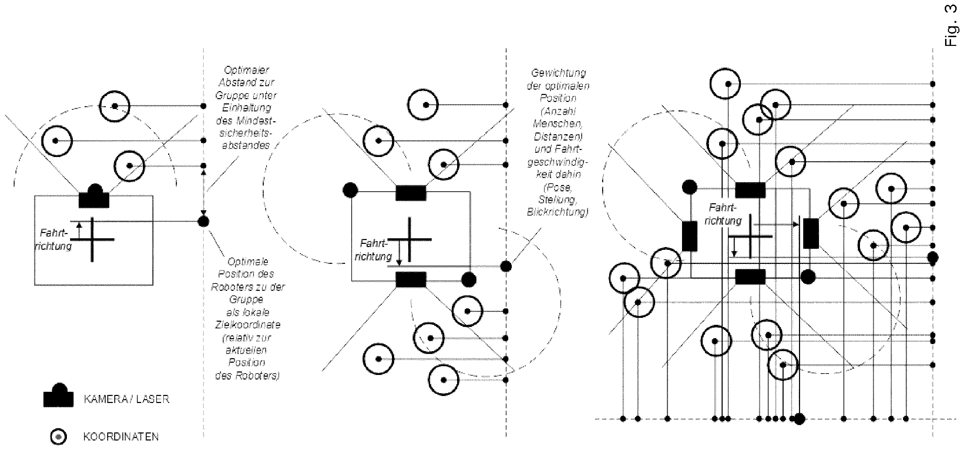

Fig. 3 zeigt von links nach rechts drei unterschiedliche Szenarien der Bestimmung der optimalen Position. Links werden wie in Fig. 2 nur Menschen im Blickwinkel der Kamera (schwarz an der Front des Feldroboters dargestellt) vor dem Feldroboter berücksichtigt und die optimale Position wird als der geometrische Mittelpunkt der erkannten Menschen angenommen, der aber in der Regel auf Grund der Rahmenbedingung, hier durch die Kreise als nicht befahrbare Bereiche veranschaulicht, nicht erreicht werden kann.

In der Mitte ist ein Szenario mit Berücksichtigung von Menschen vor und hinter dem Feldroboter gezeigt. Die optimale Position wird dabei unter Berücksichtigung dieser Menschen bestimmt, beispielsweise als geometrischer Mittelpunkt der Mittelpunkte der erkannten Menschen. Es können aber auch Gewichtungen berücksichtigt werden. Bevorzugt wird dadurch versucht, die Wege, die die Menschen zurücklegen müssen, zu minimieren.

Rechts ist ein Szenario gezeigt, in denen mit vier Kameras (schwarze Kästen), eine an jeder Seite und Lidar-Scanner (schwarze Vollkreise and zwei diametral gegenüberliegenden Ecken des Feldroboters) vier Seiten überwacht werden. Die optimale Position wird dabei unter Berücksichtigung dieser Menschen bestimmt, beispielsweise als geometrischer Mittelpunkt der Mittelpunkte der erkannten Menschen. Es können aber auch Gewichtungen berücksichtigt werden. Bevorzugt wird dadurch versucht, die Wege, die die Menschen zurücklegen müssen, zu minimieren.

## Patentansprüche

1. Feldroboter aufweisend mindestens ein Fahrwerk und insbesondere mindestens eine drauf angeordnete Plattform zur Lagerung und aufweisend einen Energiespeicher sowie mindestens eine Steuerung zur Steuerung des mindestens einen Fahrwerks und mit mindestens einem, insbesondere optischen, Bilderfassungsgerät, insbesondere einer Kamera, wobei die Steuerung eingerichtet ist, mittels mindestens eines neuronalen Netzes auf Basis von Daten mindestens des mindestens einen Bilderfassungsgeräts Hindernisse und Personen zu erkennen und zu klassifizieren, wobei, insbesondere für jede erkannte Person, mindestens eine erste Klassifikation, insbesondere mittels neuronalem Netz, durchgeführt wird, die Körperhaltung, Blickrichtung und/und Bewegungsrichtung und/oder -geschwindigkeit erkennt und wobei der Feldroboter mindestens ein Entfernungsmessgerät aufweist, **dadurch gekennzeichnet, dass** die Steuerung eingerichtet ist, mindestens eine zweite Klassifikationen für jedes in einem vordefinierten Sicherheitsabstand des Feldroboters, insbesondere mit einer Erstreckung mit einer Länge im Bereich von 0,5 bis 2m, insbesondere bis 1,5m, vom Feldroboter aus, erkannte Objekt durchzuführen, um, insbesondere mittels neuronalem Netzwerk, festzustellen, ob es sich dabei um eine auf Grundlage der Daten des mindestens einen Bilderfassungsgeräts klassifizierte Person handelt und wobei auf Basis durchgeführter Klassifikationen das Fahrwerk angesteuert wird.

2. Feldroboter nach Anspruch 1, wobei die mindestens eine erste Klassifikation ein regionbasiertes neuronales Netzwerk, insbesondere R-CNN, Fast R-CNN, Faster R-CNN, Maks R-CNN und/oder Mesh R-CNN und/oder Objekterkennungsnetzwerk, insbesondere You Only Look Once (YOLO), ist und/oder umfasst.

3. Feldroboter nach einem der vorstehenden Ansprüche, wobei der Feldroboter, insbesondere die Steuerung, eingerichtet ist, für mindestens eine, insbesondere jede erkannte Person, insbesondere basierend zumindest auf Körperhaltung, Blickrichtung und/und Bewegungsrichtung und/oder -geschwindigkeit eine Wahrscheinlichkeitsverteilung für den zukünftigen Aufenthalt der Person zu bestimmen und insbesondere aus zumindest dieser mindestens einen Wahrscheinlichkeitsverteilung eine optimale Position des Feldroboters und/oder das Fahrwerk anzusteuern, insbesondere unter Verwendung einer Dichteverteilung bestimmter Wahrscheinlichkeitsverteilungen.

4. Feldroboter nach einem der vorstehenden Ansprüche, wobei der Feldroboter, insbesondere die Steuerung, eingerichtet ist, zumindest basierend auf Entfernung, Körperhaltung, Blickrichtung und/und Bewegungsrichtung und/oder -geschwindigkeit und/oder Wahrscheinlichkeitsverteilung für den zukünftigen Aufenthalt und insbesondere einer Gewichtung basierend auf dem vorhergesagten Verhalten der Person eine optimale Position, insbesondere unter Verwendung einer, insbesondere gewichteten, Dichteverteilung zu bestimmen und insbesondere mittels Ansteuerung des Fahrwerks anzusteuern.

5. Feldroboter nach einem der vorstehenden Ansprüche, wobei der Feldroboter, insbesondere die Steuerung, eingerichtet ist, eine Bahnplanung, insbesondere mittels einer Kostenkarte der Befahrbarkeit und/oder Traversabilitätskarte, insbesondere basierend auf Neigung, Rauheit und/oder Stufenhöhe, durchzuführen und für die Ansteuerung des Fahrwerks zu nutzen.

6. Feldroboter nach einem der vorstehenden Ansprüche, wobei der Feldroboter, insbesondere die Steuerung, eingerichtet ist, bei Annäherung einer Person unter einen mindestens einen vordefinierten Anhalteabstand, insbesondere im Bereich bis 1,5 bis 10 m Abstand vom Roboter, anzuhalten und zudem eingerichtet ist, bei Annäherung einer Person in einen vordefinierten kleineren Sicherheitsabstand, insbesondere im Bereich bis 0,5 bis 2 m, insbesondere bis 1,5m, Abstand vom Roboter, unmittelbar zu stoppen, insbesondere mit einer Verzögerung größer als 3m/s/s.

7. Feldroboter nach einem der vorstehenden Ansprüche, wobei der Feldroboter, insbesondere die Steuerung, eingerichtet ist, bei Erkennung mindestens einer auf den Roboter zugehender Person, ein Entfernen des Feldroboter durch Stoppen des Fahrwerks gestoppt wird, auch wenn die Person eine Entfernung größer als eine vordefinierte Sicherheitsentfernung und/oder ein vordefinierter Anhalteabstand aufweist.

8. Feldroboter nach einem der vorstehenden Ansprüche, wobei der Feldroboter, insbesondere die Steuerung, eingerichtet ist, bei Erkennung mindestens einer auf den Roboter zugehender Person, das Fahrwerks zu stoppen, auch wenn die Person eine Entfernung größer als eine vordefinierte Sicherheitsentfernung und/oder ein vordefinierter Anhalteabstand aufweist und/oder wobei der Feldroboter, insbesondere die Steuerung, eingerichtet ist, des Fahrwerks bei Unterschreiten eines vordefinierten Anhalteabstandes durch mindestens eine erkannte Person anzuhalten und/oder wobei der Feldroboter, insbesondere die Steuerung, eingerichtet ist, bei Erkennen mindestens einer Person, insbesondere einer Mehrzahl von Personen, einen optimalen Abstand unter Berücksichtigung von Abstand, Körperhaltung, Blickrichtung und/und Bewegungsrichtung und/oder -geschwindigkeit und/oder Gewichtung zu bestimmen und/oder wobei der Feldroboter, insbesondere die Steuerung, eingerichtet ist, bei Erkennung mindestens einer auf den Roboter zugehender Person, ein Entfernen des Feldroboter von dieser Person durch Stoppen des Fahrwerks zu stoppen.

9. Feldroboter nach einem der vorstehenden Ansprüche, wobei der Feldroboter, insbesondere die Steuerung, eingerichtet ist, bei Erkennen mehr als einer Person eine optimale Position zu der erkannten Gruppe von Personen zu bestimmen und die Vorausfahrt so zu steuern, dass dieser möglichst erreicht wird und/oder das Fahrwerk so angesteuert wird, dass diese Position zumindest näherungsweise angenommen wird.

10. Feldroboter nach einem der vorstehenden Ansprüche, wobei der Feldroboter, insbesondere die Steuerung, eingerichtet ist, alle Geschwindigkeitsänderungen abgesehen vom Stoppen bei Unterschreiten eines Sicherheitsabstandes mit einer Beschleunigung mit einem Betrag von kleiner 3 m/s/s, insbesondere weniger als 1,5m/s/s, durchzuführen.

11. Feldroboter nach einem der vorstehenden Ansprüche, wobei der Feldroboter, insbesondere die Steuerung, eingerichtet ist, kontinuierlich, insbesondere mindestens einmal pro Sekunde, insbesondere mindestens drei Mal pro Sekunde, eine optimale Position bestimmt wird.

12. Feldroboter nach einem der vorstehenden Ansprüche, wobei der Feldroboter, insbesondere die Steuerung, eingerichtet ist, den Feldroboter in mindestens zwei Geschwindigkeitsstufen, und zwar eine schnelleren Eilgeschwindigkeitsstufe, insbesondere mit einer Geschwindigkeit im Bereich von oder mehr als 0,5 m/s, insbesondere bis 1,5 m/s, und einer langsameren Schleichgeschwindigkeitsstufe bis maximal 0,5 m/s, insbesondere mehr als 0,1m/s, fortzubewegen, wobei die Steuerung eingerichtet ist, die Entfernung zu einer auf Basis der Klassifikationen bestimmten optimalen Position oder Sollposition in Eilgeschwindigkeitsstufe zurückzulegen, wenn keine sich dem Feldroboter nähernde und/oder zuwendende Person, insbesondere in einem Umkreis von bis zu 10 m Radius um den Mittelpunkt des Roboters, erkannt wird und anderenfalls eine Fortbewegung nur in Schleichgeschwindigkeit durchzuführen.

13. Feldroboter nach einem der vorstehenden Ansprüche, wobei die Plattform von mindestens vier Seiten des Feldroboters zur Entnahme und/oder Ablage zugänglich ist und/oder wobei der Feldroboter an mindestens zwei Seiten angeordnete ein/ausklappbare Transportmittel, insbesondere Ablageflächen, aufweist.

14. Verfahren zur Ansteuerung eines Feldroboters wobei mittels mindestens eines neuronalen Netzes auf Basis von Daten mindestens mindestens eines Bilderfassungsgeräts Hindernisse und Personen erkannt und klassifiziert werden, wobei, insbesondere für jede erkannte Person, mindestens eine erste Klassifikation, insbesondere mittels neuronalem Netz, durchgeführt wird, die Körperhaltung, Blickrichtung und/und Bewegungsrichtung und/oder -geschwindigkeit erkennt, **dadurch gekennzeichnet, dass** mindestens eine zweite Klassifikationen für jedes in einem vordefinierten Sicherheitsabstand des Feldroboters, insbesondere mit einer Erstreckung mit einer Länge im Bereich von 0,5 bis 2m, insbesondere bis 1,5m, vom Feldroboter aus, erkannte Objekt durchgeführt wird, um, insbesondere mittels neuronalem Netzwerk, festzustellen, ob es sich dabei um eine auf Grundlage der Daten des mindestens einen Bilderfassungsgeräts klassifizierte Person handelt und wobei auf Basis durchgeführter Klassifikationen ein Fahrwerk angesteuert wird.

15. Verfahren zum Entnehmen und/oder Einbringen von Gegenständen, insbesondere pflanzlichem Material aus/in ein Feld unter Nutzung eines Feldroboters und/oder Verfahren nach einem der vorstehenden Ansprüche, wobei eine Mehrzahl von Arbeitern in der Umgebung, insbesondere in einem Umkreis von bis zu 20m, insbesondere bis zu 10 m, Radius um den Feldroboter oder den Mittelpunkt, des Feldroboters Feldarbeiten verrichtet und wiederholt pflanzliches Material auf dem Feldroboter abstellt und/oder von ihm entnimmt, wobei sich die Mehrzahl zumindest gemittelt in mindestens eine Richtung, insbesondere entlang von Pflanzreihen, fortbewegt und der Feldroboter so gesteuert wird, dass er der Mehrzahl folgt, insbesondere mittels eines Verfahrens nach dem vorstehenden Anspruch.
